# EUROPEAN PATENT SPECIFICATION

(11) **EP 2 273 893 B1**
(45) Date of publication and mention of the grant of the patent: **30.07.2014**
(21) Application number: 09728368.3
(22) Date of filing: 31.03.2009
(51) Int. Cl.: A23G 4/10

(54) **CHEWING GUM BULKING AGENTS**
FÜLLSTOFFE FÜR KAUGUMMI
AGENTS GONFLANT DE GOMME À MÂCHER

(30) Priority: 31.03.2008 US 41116
(43) Date of publication of application: 19.01.2011
(73) Proprietor: Wm. Wrigley Jr. Company, Chicago, IL 60642 (US)
(72) Inventor: HSU, Chia-hua, Glenview IL 60026 (US); BARKALOW, David, G., Deerfield IL 60015 (US)
(74) Representative: Campbell, Neil Boyd
(86) International application number: PCT/US2009/038986
(87) International publication number: WO 2009/124067

(56) References cited:
- EP-A- 0 123 742
- WO-A-92/02149
- WO-A-93/05663
- WO-A-93/06740
- WO-A-93/12665
- US-A- 5 286 501
- US-A- 5 431 929
- US-A- 5 916 606

## Description

### BACKGROUND OF THE INVENTION

The present invention relates to an improved chewing gum composition and, more specifically, relates to an improved chewing gum using specific bulking agents to give acceptable texture and flavor, while being non-cariogenic and not creating intestinal disturbances.

Chewing gum contains gum base and one or more bulking agents and typically includes additional components such as flavors, sensates, colors, and high intensity sweeteners (if desired). Typical bulking agents are saccharides (such as sugars) or polyols, and are present to create volume, supply a dissolvable mass, and create a syrup-like solution in the mouth during chewing.

Traditionally, sucrose was used as the bulking agent for chewing gums. Sucrose gives volume to a chewing gum mass and slowly dissolves during chewing, which slowly releases sweetness and enhances flavor delivery of the chewing gum. However, sucrose may lead to dental caries (tooth decay) and has limited use by diabetics.

In recent years, efforts have been made to improve healthiness of chewing gum products by making the products non-cariogenic and safe for diabetics. In sucrose-free chewing gums, sucrose typically was replaced with polyols containing six carbon atoms (C₆), such as sorbitol, maltitol, isomalt, mannitol, and xylitol. Sorbitol is used commonly due to availability and cost, while maltitol is used due to similarity to sucrose in sweetness and solubility. Polyols typically demonstrate a perception of sweetness to a consumer from 30% to 70% that of sucrose. For this reason, high intensity sweeteners ("HIS") are added to give sweetness similar to that of sucrose.

A disadvantage of most polyols is causation of gastrointestinal disturbances (such as "laxation") upon consumption. Typically, a material is considered not to cause gasto-intestinal disturbances (e.g., non-laxative), if such material is either substantially absorbed before entering the large intestine or passes though the large intestine substantially unchanged, in the quantities present in chewing gum. The amount of gastrointestinal disturbance or laxation distress experienced by a consumer of a chewing gum typically depends on the sensitivity of the consumer, the specific polyol used in the gum, and the amount of gum chewed. Therefore, there is a need for a suitable sucrose-free polysaccharide bulking agent component in chewing gum, which is non-cariogenic and does not cause gastrointestinal disturbances in the amounts consumed in chewing gum.

Dental caries is an infectious disease which damages the structure of teeth. Tooth decay, or cavities, are the consequences of caries. To not create dental caries is to be non-cariogenic. Non-cariogenicity or "toothfriendliness" of a substance such as a saccharide or a saccharide derivative may be determined by means of intraoral pH telemetry such as used by Toothfriendly International, a non-profit organization. In a standard procedure, plaque pH is measured in at least four persons during and for 30 minutes after consumption of a substance to be tested with a plaque-covered electrode. Products which do not lower plaque pH below 5.7, under the test conditions, are considered to lack cariogenic potential. A preferred chewing gum is non-cariogenic.

Further, today consumers desire healthy snacks and food products. One ingredient that has been gaining popularity is dietary fiber, especially soluble fibers. Dietary fibers are the indigestible portion of plants that move through the digestive system, absorbing water and making defecation easier. Dietary fiber typically contains non-starch polysaccharides of varying size including plant components such as dextrins, inulin, and oligosaccharides. The term "dietary fiber" means indigestible polysaccharides having average molecular weights from about 500 and to about 8000 (preferably up to about 6400), corresponding to 3 to 40-50 saccharide units.

The American Dietetic Association recommends consumption of a minimum of 20 to 35 grams per day of dietary fiber for a healthy adult. Regulatory agencies such as the U.S. Food and Drug Administration have given approvals for food products making health claims for fiber, based on recognition of the growing scientific evidence for physiological benefits of increased fiber intake.

However, water solubility of dietary fibers, such as long chain dietary fibers, typically creates a slimy, slippery textured fluid in the mouth. Thus, a long chain bulking agent useful for a chewing gum composed of dietary fiber alone is not suitable for normal consumer use. Therefore, a preferable chewing gum also has an acceptable mouthfeel including a non-slimy sensation during consumption.

Therefore there is a need for a confection such as a chewing gum, which is sucrose free, does not create gastrointestinal disturbances, is non-cariogenic, and contains dietary fiber, while possessing an acceptable consumer mouthfeel such as not being slimy.

WO 93/06740 discloses chewing gum compositions comprising fructooligosaccharides (Fos) and isomaltulose.

### SUMMARY OF THE INVENTION

In a first aspect the invention relates to a bulking agent suitable for use in a chewing gum containing components comprising
a) at least 25 wt.% of a water-soluble dietary fiber polysaccharide containing three to sixty saccharide units selected from long chain inulin, fructooligosaccharide, or indigestible dextrin, and
b) at least 25 wt.% of a non-cariogenic, non-laxative crystalline C₄₋₆ monosaccharide, selected from erythritol, tagatose and isomaltulose, wherein:
   (i) component (a) is long chain inulin and component (b) is erythritol, tagatose or isomaltulose; or
   (ii) component (a) is fructooligosaccharide and component (b) is erythritol or tagatose; or
   (iii) component (a) is indigestible dextrin and component (b) is erythritol, tagatose or isomaltulose.

In a further aspect the invention relates to a sucrose-free, non-cariogenic, non-laxative chewing gum composition containing such a bulking agent.

Such a combination of bulking agent components produces an advantageous balance of beneficial dietary fiber and sucrose-free components, while creating a chewing gum with an acceptable or superior non-slimy mouthfeel.

### DETAILED DESCRIPTION OF THE INVENTION

In this invention, sucrose-free, non-canogenic, and non-laxative bulking agents are incorporated into a confection such as a chewing gum. A chewing gum composition typically contains a water-soluble portion and a water-insoluble chewing gum base portion. Water-soluble and water-insoluble flavoring and sensate agents may be included within each such portion. Typically, the water-soluble portion dissipates with a portion of flavoring agents and sweeteners over a period of time during chewing. The gum base portion is usually, though not exclusively, in the mouth throughout the chew.

As used herein, the term "chewing gum" also includes bubble gum and confectionery products containing chewing gum. Unless otherwise specified, all percentages used herein are weight percents. As used herein "bulking agent" means the water-soluble component of a chewing gum, but not including flavors, high intensity sweeteners, colors, sensates, or encapsulated materials. Also, as used herein "sucrose-free" means substantial (e.g., <0.1 wt.% of a chewing gum) absence (preferably none) of sucrose in the formulation.

A typical chewing gum composition contains at least 5 wt.%, at least 10 wt.%, at least 20 wt.%, or at least 40 wt.% of a bulking agent. Further, typical chewing gum composition contains up to 95 wt.%, up to 85 wt.%, up to 80 wt.%, or up to 75 wt.% of such a bulking agent. Typical ranges of water-soluble bulking agent component in a chewing gum include 5 to 95 wt.%, preferably 40 to 85 wt.%, most preferably 40 to 80 wt.%. The function of the bulking agent is to provide volume to the gum mass and to act to transport at an acceptable rate water-soluble flavors, sweeteners, and sensate agents within a person's mouth throughout the chewing process. Conventional bulking agents, such as sucrose, dissolve during the chewing process at a rate such that flavors, sweeteners, and sensate agents are delivered throughout a typical chewing time.

The water-soluble portion of a chewing gum typically also includes non-bulking agents, such as high intensity sweeteners, flavoring agents and combinations thereof. In the current invention, the bulking agent may constitute between about 75% to about 99% of the water soluble portion. Preferably, the bulking agent comprises about 90-99% of the water-soluble portion.

In this invention conventional chewing gum bulking agents, which can lead to dental caries or gastrointestinal disturbances, are replaced by a combination of materials, including a polysaccharide dietary fiber and a non cariogenic, non-laxative saccharide or saccharide derivative.

In general, a saccharide is a carbohydrate described as a simple sugar, a combination of sugars, or polymerized sugars. Simple sugars typically contain four to seven carbon atoms with a formula CₙH₂ₙOₙ. Examples of simple sugars include glucose, fructose, lactose, ribose, xylose, mannose, arabinose, and galactose and typically are characterized as aldehydes or ketones which exist in linear or cyclic hemi-acetal or ketal configurations. Combinations of mono-saccharides or simple sugars form di-saccharides (such as sucrose) and polysaccharides (such as starches and cellulose). Hydrogenated derivatives of mono-saccharides include sugar alcohols such as sorbitol, mannitol and xylitol. A disaccharide contains two saccharide units and a polysaccharide contains more than two saccharide units.

A bulking agent component useful in this invention is one or more water-soluble polysaccharide compositions recognized as dietary fiber. These polysaccharides are characterized as water soluble (unlike polysaccharides such as starch which contain more saccharide units) and contain at least three and up to sixty polysaccharide units. Additionally, such dietary fiber does not contribute to dental caries (i.e. non-cariogenic) because such dietary fibers are not metabolized by bacteria in the mouth. Further, such dietary fiber does not cause gastrointestinal disturbances in the amounts used in chewing gum. Finally, dietary fiber is low in calories due to its limited digestibility. The dietary fibers used in this invention are long chain inulin, fructooligosaccharide, and indigestible dextrin.

Chewing gums of this invention contain water-soluble dietary fiber polysaccharide suitable as a bulking agent component in the chewing gum. Suitable water-soluble dietary fiber polysaccharides contain at least 3, 10, 20, or 30 saccharide units and contain up to 60 and preferably up to about 50 saccharide units. Typical ranges of saccharide units in suitable dietary fibers include 3 to 60, 3 to 50, 3 to 30, 20 to 40, and 20 to 50. The amount of such water-soluble dietary fiber polysaccharide in a bulking agent useful in a chewing gum composition of this invention is at least 25 wt.%, e.g. at least 30 wt.%, at least 35 wt.%, or at least 40 wt.%. Such water-soluble dietary fiber polysaccharide may be included in a chewing gum bulking agent of this invention typically up to 50 wt.%, more typically up to 45 wt.%, and preferably up to 40 wt.%. Typical ranges of such polysaccharide dietary fibers in chewing gums of this invention include 25 to 40 wt.%, 25 to 35 wt.%, 25 to 30 wt.%, 40 to 50 wt.% and 30 to 35 wt.%.

Indigestible dextrins (useful as water-soluble dietary fiber polysaccharide in this invention) are a group of low molecular weight carbohydrates produced by hydrolysis of starch by acid in a roasting process. These dextrins are mixtures of α-(1→4)-linked D-glucose polymers starting with an α-(1→6) bond, which are then treated with additional roasting to create branched carbohydrates or pyrodextrins. The dextrins are further treated with enzymes to make them highly branched and virtually indigestible. Indigestible dextrins do not contribute to dental caries (i.e., are non-cariogenic) due to their low reducing sugar levels. They do not cause gastrointestinal disturbances at the levels of use in chewing gum. Typical indigestible dextrins contain about 10 to 30 (preferably 10 to 25) saccharide units. Varieties of such indigestible dextrins are sold under trade names of Fibersol™ and Nutriose™. Fibersol™ is marketed by Fibersol America, a division of Matsutani Chemical Industry Co., Ltd of Hyogo-Pref., Japan. Nutriose™ is marketed by Roquette Frères, of Lestrem, France.

Inulin (useful as water-soluble dietary fiber polysaccharide in this invention) is a group of oligosaccharides occurring naturally in many plants and belongs to a class of carbohydrates called fructans. Inulin is a prebiotic fermentable fiber and is metabolized by gut flora yields short chain fatty acids, which are reported to increase absorption of calcium, magnesium, and iron. Inulin also promotes an increase in the mass and health of intestinal Lactobacillus and Bifidobacterium populations. Inulin is composed of linear chains of fructose units linked by β (2→1) bonds and is often terminated by a glucose unit. Inulins contain chains of 3 to 60 fructose units. Inulin sources contain polymers in a distribution of chain lengths, which are described by their DP (number of sugar units). Typically short chain inulin has DP<20 and long chain inulin has DP>20. Typically, inulin material is in a long chain form, though other length variations are available. In the present invention, long chain inulin is used. A typical long chain inulin source, such as Beneo HP inulin supplied by Orafti, has an average DP>23, creating an inulin material with long polymer chains. A typical short chain inulin source, such as DeSugar Inulin supplied by Cargill, has an average DP = 10, creating a inulin material with short polymer chains. Inulin has a minimal impact on blood sugar and does not raise blood triglycerides, making it generally considered suitable for diabetics.

Fructooligosaccharide ("FOS") (useful as water-soluble dietary fiber polysaccharide in this invention) is composed of linear chains of fructose units linked by β (2→1) bonds and is often terminated by glucose units. FOS typically contains chains of around 3 to 10 fructose units. Fructooligosaccharide can be produced by degradation of inulin. Fructooligosaccharide resists hydrolysis by salivary and intestinal digestive enzymes, and thus is non-cariogenic and low calorie.

In this invention, dietary fiber is included within a gum composition as a partial substitute for sucrose and polyols as a bulking agent.. Specifically, dietary fiber is considered beneficial for its health attributes. Additionally, dietary fiber does not contribute to dental caries as it is not metabolized by bacteria in the mouth. Dietary fiber does not cause gastrointestinal disturbances in the amounts used in chewing gum. Further, dietary fiber is low in calories due to its limited digestibility.

The dietary fiber materials used in this invention are water soluble, which allows them to leave the gum mass as the product is chewed. Typical solubility values are listed in Table 1. However, this physical characteristic typically creates a slimy, slippery textured fluid in the mouth as the gum is chewed. Thus, a bulking agent composed of dietary fiber alone is not suitable for normal consumer use. Dietary fiber is not as sweet as sucrose and often does not contribute to the sweetness as the gum is chewed. As sweetness enhances flavor delivery, chewing gums made with only dietary fiber do not have the flavor delivery expected of sucrose or polyol based chewing gums. Further material characteristics are listed in Table 1.

**Table 1**

| Characteristics of Typical Dietary Fibers Used in Bulking Agents | | | | |
|---|---|---|---|---|
| Ingredient | Average Molecular Weight | Number of Saccharide Units | Solubility in Water | Sweetness Relative to Sucrose |
| Nutriose® (indigestible dextrin) | 4500 | 25 | 70% (25°C) | 10% |
| Fibersol® (indigestible dextrin) | 2160 | 12 | 70% (25°C) | 10% |
| Inulin (short chain) * | 540 - 3420 | 3 - 19 | 20% (20°C) | 30% |
| Inulin (long chain) | 3600 - 10800 | 20 - 60 | 20% (20°C) | 30% |
| Fructooligosaccharide | 540 - 1800 | 3 - 10 | 75% (25°C) | 30% |
| Polydextrose | 2160 | 12 | 80% (20°C) | <10% |

| | | | | |
|---|---|---|---|---|
| * not according to the invention | | | | |

Another component of the bulking agent of this invention is a water-soluble crystalline mono-saccharide, which does not cause gastrointestinal disturbances and is non-laxative. Certain saccharides and hydrogenated saccharides of 1 to 2 saccharide units (i.e. about 100 - 360 molecular weight) have sweetness, do not cause dental caries, and do not cause gastrointestinal disturbances. Non-cariogenic, non-laxative crystalline C₄₋₆ mono-saccharides selected from erythritol, tagatose, and isomaltulose are used in the invention. The crystalline form of these materials is employed in this invention because the crystalline form gives volume and chewing texture similar to the crystalline sucrose and polyols commonly used in chewing gums.

The amount of such crystalline saccharide in a bulking agent useful in a chewing gum composition of this invention is at least 25 wt.%, e.g. at least 30 wt.%, at least 35 wt.%, or at least 40 wt.%. Such water-soluble crystalline saccharide may be included in a chewing gum bulking agent of this invention typically up to 50 wt.%, more typically up to 45 wt.%, and preferably up to 40 wt.%. Typical ranges of such crystalline saccharide in chewing gums of this invention include 25 to 40 wt.%, 25 to 35 wt.%, 25 to 30 wt.%, 40 to 50 wt.%, and 30 to 35 wt.%.

Components of the bulking agents useful in this invention are selected from specific combinations of saccharides. Certain crystalline saccharides and saccharide derivatives of 1 to 2 saccharide units (i.e., about 100 - 360 molecular weight) have sweetness, do not cause dental caries, and do not cause gastrointestinal disturbances. Suitable saccharide materials are erythritol, tagatose, and isomaltulose. The crystalline form of these materials is employed in this invention because the crystalline form gives volume and chewing texture similar to the crystalline sucrose or polyols commonly used in chewing gums.

**Table 2**

| Characteristics of Typical Crystalline Saccharides Used in Bulking Agents | | | | |
|---|---|---|---|---|
| Ingredient | Molecular Weight | Number of Saccharide Units | Solubility in water | Sweetness Relative to Sucrose |
| Erythritol | 122 | 1 | 37% (25°C) | 70% |
| Tagatose | 180 | 1 | 58% (20°C) | 92% |
| Isomaltulose | 342 | 2 | 29% (20°C) | 40% |

The improved chewing gum of this invention uses a combination of water-soluble polysaccharide dietary fibers and these crystalline saccharides as a bulking agent. This bulking agent composition may be used in a variety of chewing gums, including bubble gum and coated chewing gum products. In this combination, a group of C₄ polyols and monosaccharides are used in conjunction with a group of polysaccharide dietary fibers to form a bulking agent suitable for use in a chewing gum, which does not have the disadvantages of dietary fiber used as the only component of a bulking agent, such as producing a slimy mouthfeel.

Erythritol is a four-carbon sugar alcohol. Erythritol is produced from glucose by fermentation with the yeast, *Moniliella pollinis.* Erythritol is absorbed into the bloodstream in the small intestine. Because erythritol is absorbed before it enters the large intestine, it does not normally cause the laxative effects that are often experienced with consumption of other polyols, such as sorbitol, maltitol, and xylitol. Erythritol can not be metabolized by oral bacteria, so it does not contribute to tooth decay.

Tagatose is a monosaccharide which is produced from lactose which is hydrolyzed to glucose and galactose. The galactose is then isomerized to D-tagatose. FDA approved tagatose as a food additive in October 2003. Tagatose is metabolized differently from sucrose and tagatose has a minimal effect on blood glucose and insulin levels.

Isomaltulose (also called palatinose) is a reducing glucose-fructose disaccharide in which glucose and fructose are linked through their respective 1 and 6 carbon atoms. Isomaltulose commercially is produced enzymatically from sucrose. Because isomaltulose is digested much slower than sucrose, isomaltulose has a lower glycemic response than sucrose making it acceptable to diabetics. Isomaltulose is toothfriendly due to its slow digestion in the mouth.

In another aspect of this invention, each of the water-soluble dietary fiber polysaccharide and of the water-soluble crystalline mono-saccharide described as components of a chewing gum bulking agent of this invention may be described in terms of amounts of a chewing gum. Thus, each of such components separately typically is at least 5 wt.%, at least 10 wt.%, at least 20 wt.%, at least 25 wt.% or at least 40 wt.% of a chewing gum composition. Each of such components separately may be present up to 70 wt.%, up to 60 wt %, up to 40 wt.%, or up to 30 wt.% of a chewing gum. Typical ranges of each such component separately include 5 to 70 wt.%, 5 to 60 wt %, 10 to 50 wt.%, and 20 to 40 wt.%. A chewing gum of this invention need not contain equal amounts of each such component.

Insoluble gum base materials typically contain food-compatible elastomers, resins, fats and oils, waxes, softeners, and inorganic fillers. Elastomers may include polyisobutylene, isobutylene-isoprene copolymer (butyl rubber) and styrene butadiene rubbers as well as natural latexes such as chicle. Resins include polyvinylacetate and torpene resins. Fats and oils also may be included in the gum base, including tallow, hydrogenated and partially hydrogenated vegetable oils, and cocoa butter. Commonly employed waxes include paraffin, beeswax, and carnauba. According to a preferred embodiment of the present invention, the insoluble gum base typically constitutes 5 - 95 wt.% of the gum (preferably about 15 to about 60 wt.%) of the gum. The gum base typically also includes an inorganic filler component, such as calcium carbonate, magnesium carbonate, talc, dicalcium phosphate, or the like. The filler typically constitutes between about 5 wt.% and about 60 wt.%, preferably about 5 wt.% to about 50 wt.%, of the gum base.

Softeners are added to the chewing gum in order to optimize the chewability and texture of the gum. Softeners, also known in the art as plasticizers or plasticizing agents, generally constitute up to about 15 wt.% of the chewing gum. Softeners contemplated for use in the present invention include glycerin, lecithin and combinations thereof.

Gum bases also may contain other softeners, including glycerol monostearate and glycerol triacetate. Further, gum bases may also contain optional ingredients such as antioxidants, colors, and emulsifiers. A chewing gum of the present invention typically may include any commercially-acceptable gum base.

The previously described materials may readily be incorporated into a chewing gum composition. Other conventional gum ingredients may be used in the present invention. That is, the bulking agent can be incorporated into conventional chewing gum formulations in a conventional manner.

Depending on the particular saccharide chosen and the particular sweetness profile preferred, a combination of coated and uncoated high intensity sweeteners can be added. The sweetener amount may be present in the chewing gum in the amount within the range from about 0.01 wt.% to about 20.0 wt.%. A non-limiting listing of sweeteners contemplated by the present invention includes saccharin, thaumatin, sucralose, alitame, saccharine salts, aspartame, and acesulfame-K.

A flavoring agent may be present in the chewing gum in an amount within the range of from about 0.1 wt.% to about 20 wt.%, and preferably from about 0.5 wt.% to about 5.0 wt.%, of the gum. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorially acceptable blend. All such flavors and flavor blends are contemplated by the present invention.

Optional ingredients not included within the bulking agent such as colors, emulsifiers, sensients, actives, medicants, and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or shapes, or casting into pellets, balls, or other shapes.

Generally, the ingredients are mixed by first melting the gum base and adding it to the preheated running mixer. The base may also be melted in the mixer itself. Color or emulsifiers may also be added at this time. A softener such as glycerin may also be added at this time, along with any syrup and a portion of the bulking agent and sweetener. After some agitation, the remaining bulking agent and sweetener are added to the mixer, in portions or all at once. Any additional ingredients are typically added with the final portion of bulking agent. Mixing occurs until degree of consistency is reached. Those skilled in the art will recognize that variations of the above procedure may be followed, for example, the mixer could be continuous and the components could be added in different orders.

Dietary fiber is a broad term and in this disclosure dietary fiber refers to polysaccharides of 3 to 60 units (540 - 10800 average molecular weight), preferably 3 to 50 saccharide units, and also preferably 5 to 40 saccharide units. Other typical dietary fiber components contain 3 to 30 saccharide units, 20 to 40 saccharide units, and 10 to 30 saccharide units. Short chain dietary fiber typically contains fewer than 20 saccharide units, preferably up to 15 saccharide units, preferably more than 6 saccharide units, and usually 10 +/- saccharide units. Long chain dietary fiber typically contains at least 20 saccharide units. Dietary fiber can be used as a bulking agent in chewing gum because it is soluble and has volume. It combines easily with the other components of chewing gum and dissolves out of the gum mass as the product is chewed. The challenge is that these materials pick up water and create an objectionable slimy mouth coating as the gum is chewed.

In the compositions of this invention, suitable dietary fibers are combined with specific crystalline saccharides as described. Mixtures of dietary fibers and mixtures of crystalline saccharides or saccharide derivatives may be used.

Table 5 gives sensory data on relative amounts of slimy mouth coating for chewing gum samples made with 100% inulin (long chain) bulking agent, 100% Nutriose bulking agent, and with sorbitol/mannitol bulking agent (control).

The inventors found that they could modify this slimy mouth coating with a substitution of a portion of the bulking agent with a small crystalline saccharide in particular, crystalline saccharides (i.e., 100 - 360 molecular weight). In solution, the dissolved small crystalline material appears to interfere with the large amorphous polysaccharide molecules and reduce the perceived slimy solution characteristic. Often these small saccharide materials add sweetness to the chewing gum. When they do add sweetness, they increase the perception of flavor while the gum is being chewed. Tables 6 and 7 give sensory data on relative amount of sweetness and flavor delivery for chewing gum samples made with 100% inulin (long chain) bulking agent, 100% Nutriose bulking agent, and sorbitol/mannitol bulking agent (Control).

As the goal is to make a non-cariogenic chewing gum without intestinal disturbance, but with an acceptable mouthfeel, the choices for crystalline saccharides are limited to erythritol, tagatose, and isomaltulose. Preferably, substances which do create intestinal disturbances are substantially excluded from the compositions of this invention. Thus, preferably embodiments of this invention do not contain significant (typically less than 10 wt.% and preferably less than 1 wt.%) amounts of 5-and 6-carbon atom polyols such as sorbitol, maltitol, isomalt, xylitol, or mannitol. Preferably, these polyols are absent from the compositions of this invention.

An embodiment of the present invention is directed to a chewing gum bulking agent, comprised of at least 25 wt.% polysaccharide of 3 to 30 saccharide units and at least 25 wt.% crystalline saccharide, which is non-cariogenic. The polysaccharide of 3 to 30 saccharide units is selected from the group consisting of indigestible dextrins, long chain inulin, and fructooligosaccharide. The crystalline saccharide is selected from the group consisting of erythritol, tagatose, and isomaltulose.

Another embodiment of the present invention is directed to a chewing gum bulking agent, comprised of not more than 75 wt.% polysaccharide of 3 to 30 saccharide units and not more than 75 wt.% crystalline saccharide, which is non-cariogenic. The polysaccharide of 3 to 30 saccharide units is selected from the group consisting of indigestible dextrins, inulin, and fructooligosaccharide. Crystalline saccharide is selected from the group consisting of erythritol, tagatose, and isomaltulose.

Another embodiment of the present invention is directed to a chewing gum bulking agent, comprised of 25 - 75 wt.% polysaccharide of 3 to 30 saccharide units and 75-25 wt.% crystalline saccharide, which is non-cariogenic. Preferably, the present disclosure is directed to a chewing gum bulking agent, comprised of 40 - 60 wt.% polysaccharide of 3 to 30 saccharide units and 60 - 40 wt.% crystalline saccharide, which is non-cariogenic. The polysaccharide of 3 to 50 saccharide units is selected from the group consisting of indigestible dextrins, inulin, and fructooligosaccharide. The crystalline saccharide is selected from the group consisting of erythritol, tagatose, and isomaltulose.

Specific combinations of materials used as bulking agents of this invention include compositions of inulin (long chain) and erythritol, which contain at least 25 wt.%, preferably at least 40 wt.%, inulin (long chain) and at least 25 wt.%, preferably at least 40 wt.%, erythritol. A most preferable composition contains 50 wt.% ±5 wt.% of each inulin (long chain) and erythritol.

Specific combinations of materials used as bulking agents of this invention include compositions of inulin (long chain) and tagatose, which contain at least 25 wt.%, preferably at least 40 wt.%, inulin (long chain) and at least 25 wt.%, preferably at least 40 wt.%, tagatose. A most preferable composition contains 50 wt.% ±5 wt.% of each inulin (long chain) and tagatose.

Specific combinations of materials used as bulking agents of this invention include compositions of inulin (long chain) and isomaltulose, which contain at least 25 wt.%, preferably at least 40 wt.%, muslin (long chain) and at least 25 wt.%, preferably at least 40 wt.%, isomaltulose. A most preferable composition contains 50 wt.% ±5 wt.% of each inulin (long chain) and isomaltulose.

Another specific combination used a bulking agent is indigestible dextrin and isomaltulose, containing at least 25 wt.%, preferably at least 40 wt.%, indigestible dextrin and at least 25 wt.%, preferably at least 40 wt.%, isomaltulose. A most preferable composition contains 50 wt.% ±5 wt.% of each indigestible dextrin (such as Nutriose®) and isomaltulose.

Another specific combination used, a bulking agent is indigestible dextrin and tagatose, containing at least 25 wt.%, preferably at least 40 wt.%, indigestible dextrin and at least 25 wt.%, preferably at least 40 wt.%, tagatose. A most preferable composition contains 50 wt.% ±5 wt.% of each indigestible dextrin (such as Nutriose®) and tagatose.

Another specific combination used a bulking agent is indigestible dextrin and erythritol, containing at least 25 wt.%, preferably at least 40 wt.%, indigestible dextrin and at least 25 wt.%, preferably at least 40 wt.%, erythritol. A most preferable composition contains 50 wt.% ±5 wt.% of each indigestible dextrin (such as Nutriose®) and erythritol.

Another specific combination used a bulking agent is fructooligosaccharide and erythritol, containing at least 25 wt.%, preferably at least 40 wt.%, fructooligosacchride and at least 25 wt.%, preferably at least 40 wt.%, erythritol. A most preferable composition contains 50 wt.% ±5 wt.% of each fructooligosaccharide and erythritol.

Another specific combination used a bulking agent is fructooligosaccharide and tagatose, containing at least 25 wt.%, preferably at least 40 wt.%, fructooligosacoharide and at least 25 wt.%, preferably at least 40 wt.%, tagatose. A most preferable composition contains 50 wt.% ±5 wt.% of each fructooligosaccharide and tagatose.

Depending on the DP of the insulin source, chewing gum may be made using 100% long chain inulin as the bulking agent.

### EXAMPLES

The following examples and comparative runs illustrate, but do not to limit, this invention. Examples 1, 3, 4, 6 and 7 are now outside claim 1.

### Examples 1-8 - Comparative Runs A-F

Examples and comparative runs of chewing gum formulations containing bulking agents containing polysaccharides of 3 to 40 saccharide units in combination with crystalline saccharides and saccharide derivatives of 1-2 units are shown in Tables 3 and 4. Each of these formulations contained 32 wt.% gum base, 0.17 wt.% color component, and 2.6 wt.% flavor component, 1.9 wt.% encapsulated sweetener, and 0.1 wt.% lecithin. Additional components also are shown in Tables 3 and 4.

**Table 3**

| Gum Formulations of Comparative Runs A-F | | | | | | |
|---|---|---|---|---|---|---|
| Examples/Runs | | | | | | |
| Ingredients (wt.%) | Run A | Run B | Run C² | Run D | Run E | Run F¹ |
| Glycerin | 4.9 | 9.7 | 9.7 | 2.5 | 0 | 0 |
| Sorbitol powder | 0 | 0 | 48.5 | 0 | 0 | 0 |
| Mannitol powder | 0 | 0 | 4.0 | 0 | 0 | 0 |
| Erythritol | 0 | 0 | 0 | 52.5 | 0 | 0 |
| Isomaltulose | 0 | 0 | 0 | 0 | 63.2 | 0 |
| Indigestible Dextrin¹ | 0 | 53.5 | 0 | 0 | 0 | 0 |
| Inulin | 58.4 | 0 | 0 | 0 | 0 | 0 |
| FOS | 0 | 0 | 0 | 0 | 0 | 0 |
| Polydextrose | 0 | 0 | 0 | 0 | 0 | 0 |
| Tagatose | 0 | 0 | 0 | 0 | 0 | 63.2 |

| | | | | | | |
|---|---|---|---|---|---|---|
| ¹ Nutriose™ indigestible dextrin ² Contains 1% added water | | | | | | |

**Table 4**

| Gum Formulations of Examples 1-8 | | | | | | | | |
|---|---|---|---|---|---|---|---|---|
| Examples/Runs | | | | | | | | |
| Ingredients (wt.%) | Ex.1 | Ex.2 | Ex.3 | Ex.4 | Ex.5 | Ex.6 | Ex.7 | Ex.8 |
| Glycerin 4.9 | 4.9 | 0 | 0 | 9.7 | 6.4 | 7.8 | 0 | 0 |
| Sorbitol powder | 0 | 0 | 0 | 0 | 0 | 0 | 0 | 0 |
| Mannitol powder | 0 | 0 | 0 | 0 | 0 | 0 | 0 | 0 |
| Erythritol | 14.6 | 31.6 | 47.2 | 0 | 0 | 0 | 0 | 31.6 |
| Isomaltulose | 0. | 0 | 0 | 13.4 | 28.4 | 41.6 | 47.2 | 0 |
| Indigestible Dextrin¹ | 0 | 0 | 0 | 40.2 | 28.4 | 13.9 | 0 | 0 |
| Inulin | 43.8 | 31.6 | 15.7 | 0 | 0 | 0 | 0 | 0 |
| FOS | 0 | 0 | 0 | 0 | 0 | 0 | 15.7 | 0 |
| Polydextrose | 0 | 0 | 0 | 0 | 0 | 0 | 0 | 31.6 |
| Tagatose | 0 | 0 | 0 | 0 | 0 | 0 | 0 | 0 |

| | | | | | | | | |
|---|---|---|---|---|---|---|---|---|
| ¹Nutriose™ indigestible dextrin | | | | | | | | |

Chewing gums were prepared according to the formulas in Tables 3 and 4. Ingredients listed in the formula were combined in a 19-liter (5 U.S. gallon) standard mixer preheated to 45 - 55°C. After thorough mixing, the gum was then sheeted, cut, and wrapped. Sensory testing was performed on these formulations, which used 5 to 7 people chewing samples in a blind and random order. Results were recorded for amount of perceived slimy mouth coating, sweetness, and flavor on a 1 to 10 scale, with 10 being the greatest.

As given in Tables 5, 6 and 7, inulin (long chain) and Nutriose containing chewing gums had more slimy mouth coating, less sweetness, and less flavor than sorbitol/mannitol containing chewing gums (control).

| **Table 5 - Month Coating (sliminess)** | | | |
|---|---|---|---|
| **Chew time (minutes):** | **0.5** | **1** | **2** |
| Control (Srobitol/mannitol) | 3.00 | 3.17 | 3.67 |
| Inulin 100% | 5.17 | 5.83 | 4.17 |
| Nutriose100% | 4.20 | 4.40 | 4.00 |

Table 5 gives sensory data on relative amount of slimy mouth coating for chewing gums made with 100% inulin (long chain) bulking agent (Run A), 100% Nutriose bulking agent (Run B), and sorbitol/mannitol bulking agent (Run C) (Control).

| **Table - 6 Sweetness** | | | |
|---|---|---|---|
| **Chew time (minutes):** | **0.5** | **1** | **2** |
| Control (Srobitol/mannitol) | 5.83 | 6.17 | 5.33 |
| Inulin 100% | 3.83 | 4.83 | 4.17 |
| Nutriose100% | 5.00 | 5.17 | 5.17 |

Table 6 gives sensory data on relative amount of sweetness delivery for chewing gums made with 100% inulin (long chain) bulking agent (Run A), 100% Nutriose bulking agent (Run B), and sorbitol/mannitol bulking agent (Run C) (control).

| **Table 7 - Flavor Delivery** | | | |
|---|---|---|---|
| **Chew time (minutes):** | **0.5** | **1** | **2** |
| Control (Srobitol/mannitol) | 5.17 | 5.17 | 4.50 |
| Inulin 100% | 3.83 | 4.17 | 3.83 |
| Nutriose100% | 5.50 | 5.17 | 4.67 |

Table 7 gives sensory data on relative amount of flavor delivery for chewing gums made with 100% inulin (long chain) bulking agent (Run A), 100% Nutriose bulking agent (Run B), and sorbitol/mannitol bulking agent (Run C) (Control).

Tables 8, 9, and 10 give sensory data on relative amounts of slimy mouth coating for chewing gums made with 100 to 0% erythritol and 0 to 100 % inulin (long chain) bulking agents.

As given in Table 8, throughout a two-minute chew, the 100% inulin (long chain) bulking agent of Run A had a higher mouth coating than the sorbitol/mannitol bulking agent control of Run C. Substitution of erythritol for a portion of the inulin in the bulking agent reduced the amount of mouth coating. The 50/50 inulin/erythritol of Ex. 2 has the lowest mouth coating which indicates an apparent synergy between the polysaccharide and the smaller crystalline saccharide derivative.

| **Table 8 - Mouth Coating (sliminess)** | | | |
|---|---|---|---|
| **Chew time (minutes):** | **0.5** | **1** | **2** |
| Control (Srobitol/mannitol) | 3.00 | 3.17 | 3.67 |
| Erythritol/Inulin 100%/0% | 3.33 | 3.00 | 2.50 |
| Erythritol/Inulin 75%/25% | 3.00 | 3.00 | 2.33 |
| Erythritol/Inulin 50%/50% | 2.50 | 2.00 | 1.67 |
| Erythritol/Inulin 25%/75% | 3.83 | 4.33 | 3.50 |
| Erythritol/Inulin 0%/100% | 5.17 | 5.83 | 4.17 |

As given in Table 9, throughout a two-minute chew, the 100% inulin (long chain) bulking agent of Run A had less sweetness than the sorbitol/mannitol bulking agent Run C control. Substitution of erythritol for inulin (long chain) in the bulking agent reduced the amount of mouth coating.

| **Table - 9 Sweetness** | | | |
|---|---|---|---|
| **Chew time (minutes):** | **0.5** | **1** | **2** |
| Control (Srobitol/mannitol) | 5.83 | 6.17 | 5.33 |
| Erythritol/Inulin 100%/0% | 6.67 | 6.50 | 5.00 |
| Erythritol/Inulin 75%/25% | 6.17 | 6.17 | 5.33 |
| Erythritol/Inulin 50%/50% | 4.67 | 5.17 | 4.83 |
| Erythritol/Inulin 25%/75% | 4.67 | 5.00 | 4.33 |
| Erythritol/Inulin 0%/100% | 3.83 | 4.83 | 4.17 |

As given in Table 10, throughout the two-minute chew, the 100% inulin (long chew) sample had less perceived flavor than the control. Addition of erythritol increased the perceived flavor.

| **Table 10. Flavor Delivery** | | | |
|---|---|---|---|
| **Chew time (minutes):** | **0.5** | **1** | **2** |
| Control (Srobitol/mannitol) | 5.17 | 5.17 | 4.50 |
| Erythritol/Inulin 100%/0% | 5.33 | 5.50 | 4.83 |
| Erythritol/Inulin 75%/25% | 5.33 | 5.17 | 4.33 |
| Erythritol/Inulin 50%/50% | 4.50 | 4.83 | 4.33 |
| Erythritol/Inulin 25%/75% | 4.67 | 4.83 | 4.33 |
| Erythritol/Inulin 0%/100% | 3.83 | 4.17 | 3.83 |

Tables 11, 12, and 13 show sensory data on relative amounts of slimy mouth coating for chewing gums made with 100 to 0% isomaltulose and 0 to 100 % Nutriose.

As illustrated in Table 11, throughout a 2-minute chew, the 100% Nutriose sample had a higher mouth coating than the control. Substitution of isomaltulose for a portion of the dextrin in the bulking agent reduced the amount of slimy mouth coating. 50/50 Nutriose/isomaltulose (Ex. 5) had the lowest mouth coating which indicates an apparent synergy between the polysaccharide and the small crystalline saccharide.

| **Table 11 - Mouth Coating (sliminess)** | | | |
|---|---|---|---|
| **Chew time (minutes):** | **0.5** | **1** | **2** |
| Control (Srobitol/mannitol) | 3.00 | 3.17 | 3.67 |
| Isomaltulose/Nutriose 100%/0% | 2.33 | 3.00 | 2.67 |
| Isomaltulose/Nutriose 75%/25% | 3.25 | 3.50 | 3.50 |
| Isomaltulose/Nutriose 50%/50% | 2.40 | 2.40 | 2.40 |
| Isomaltulose/Nutriose 25%/75% | 2.80 | 3.00 | 2.20 |
| Isomaltulose/Nutriose 0%/100% | 4.20 | 4.40 | 4.00 |

As given in Table 12, throughout a two-minute chew, the 100% Nutriose sample had less sweetness than the control. Substitution of isomaltulose for a portion of the dextrin increased the sweetness of the finished chewing gum.

| **Table - 12 Sweetness** | | | |
|---|---|---|---|
| **Chew time (minutes):** | **0.5** | **1** | **2** |
| Control (Srobitol/manitol) | 5.83 | 6.17 | 5.33 |
| Isomaltulose/Nutriose 100%/0% | 5.67 | 7.00 | 6.17 |
| Isomaltulose/Nutriose 75%/25% | 6.17 | 6.50 | 5.83 |
| Isomaltulose/Nutriose 50%/50% | 5.50 | 6.17 | 5.33 |
| Isomaltulose/Nutriose 25%/75% | 5.50 | 5.50 | 4.83 |
| Isomaltulose/Nutriose 0%/100% | 5.00 | 5.17 | 5.17 |

As given in Table 13, throughout a two-minute chew, the 100% Nutriose sample had less perceived flavor than the control. Substitution of isomaltulose for a portion of the dextrin increased the perceived flavor of the finished chewing gum. After 5-minute chew, the addition of isomaltulose increased the perceived flavor. Isomaltulose was not very soluble, and needed some mastication to dissolve.

| **Table 13- Flavor Delivery** | | | |
|---|---|---|---|
| **Chew time (minutes):** | **0.5** | **1** | **2** |
| Control (Srobitol/mannitol) | 5.17 | 5.17 | 4.50 |
| Isomaltulose/Nutriose 100%/0% | 4.83 | 5.33 | 5.17 |
| Isomaltulose/Nutriose 75%/25% | 5.50 | 6.17 | 5.50 |
| Isomaltulose/Nutriose 50%/50% | 5.50 | 6.17 | 4.83 |
| Isomaltulose/Nutriose 25%/75% | 5.33 | 5.50 | 4.67 |
| Isomaltulose/Nutriose 0%/100% | 5.50 | 5.17 | 4.67 |

Table 3 also shows chewing gum formulations containing bulking agents containing 100% erythritol (Run D), 100% isomaltulose (Run E), and 100% tagatose (Run F). All three samples were chewed and evaluated against the control (Run C). The three samples and the control had similar mouth texture. The erythritol sample was similar to the control in perceived sweetness and flavor delivery. The isomaltulose and tagatose samples had lower perceived sweetness and flavor than the control due to the lower sweetness of isomaltulose with tagatose when compared to sorbitol with mannitol. All of the samples were considered acceptable with respect to mouthfeel, however, none of these runs contained dietary fiber considered to have health benefits.

Table 4 contains examples of chewing gum formulations containing bulking agents containing isomaltulose with FOS (Ex. 7) and containing erythritol with polydextrose (Ex. 8). The two samples were chewed and evaluated against the control (Run C). The two samples were similar to the control in mouth texture, perceived sweetness and perceived flavor delivery. All of the samples were considered acceptable. These examples did contain beneficial dietary fiber.

### Comparative Runs G-H

Table 14 contains examples of chewing gum formulations containing erythritol and dietary fiber polysaccharide having a molecular weight greater than 5000.

**Table 14**

| Gum Formulations of Comparative Runs G and H | | |
|---|---|---|
| Ingredients (wt.%) | Run G | Run H |
| Gum Base | 32 | 32 |
| Glycerin | 2.5 | 2.5 |
| Flavor | 2.6 | 2.6 |
| Water added | 0 | 0 |
| Encapsulated Sweeteners | 1.9 | 1.9 |
| Color | 0.2 | 0.2 |
| Lecithin | 0.1 | 0.1 |
| Carboxymethylcellulose 10K | 30.4 | 0 |
| Carboxymethylcellulose 15K | 0 | 30.4 |
| Erythritol | 30.3 | 30.3 |

Chewing gums were prepared according to the formulations in Table 14 and the procedures described in Examples 1-8.

Samples of these formulations were chewed and evaluated as described for Examples 1-8. Chewing gum Runs G and H broke apart in the mouth while being chewed more than with chewing gum Examples 4-6. Run G created more slimy mouth coating than was created with the chewing of the other 50/50 chewing gum examples (i.e., Ex. 2 and 6).

The chewing gum of Run E would not hold together in the mixer and could not be sheeted. It was chewed and evaluated. The chewing gum of Run H broke apart in the mouth more than Run D and Run E chewing gum was slimier than Run G. The chewing gums of Runs G and H are not acceptable chewing gum products.

### Comparative Runs I-K

Table 15 contains examples of chewing gum formulations containing inulin (short chain) with DP≅10 (made with DeSugar Inulin by Cargill). Initial product texture and mixing texture was adjusted by chewing gum changing glycerin level.

**Table 15**

| Gum Formulations of Comparative Runs I - K | | | |
|---|---|---|---|
| Examples/Runs | | | |
| Ingredients (wt.%) | Run I | Run J | Run K |
| Gum Base | 32 | 32 | 32 |
| Glycerin | 0 | 9 | 12 |
| Flavor | 2.64 | 2.64 | 2.64 |
| Water | 0 | 1.07 | 0 |
| HIS Sweeteners | 1.87 | 1.87 | 1.87 |
| Color | .17 | .17 | .17 |
| Lecithin (DP≅10) | 63.22 | 54.23 | 51.23 |

Chewing gums were prepared according to the formulations in Table 15 and the procedures described in Examples 1-8.

Samples of these formulations were chewed and evaluated as described for Examples 1-8. Chewing gum Runs I, J and K chewed similar to standard gum. Glycerin addition softened the initial bite texture.

## Claims

1. A bulking agent suitable for use in a chewing gum containing components comprising:
a) at least 25 wt.% of a water-soluble dietary fiber polysaccharide containing three to sixty saccharide units selected from long chain inulin, fructooligosaccharide, or indigestible dextrin, and
b) at least 25 wt.% of a non-cariogenic, non-laxative crystalline C₄₋₆ monosaccharide, selected from erythritol, tagatose and isomaltulose, wherein:
(i) component a) is long chain inulin and component b) is erythritol, tagatose or isomaltulose; or
(ii) component a) is fructooligosaccharide and component b) is erythritol or tagatose; or
(iii) component a) is indigestible dextrin and component b) is erythritol, tagatose or isomaltulose.

2. A bulking agent of claim 1 in which component a) is long chain inulin or indigestible dextrin.

3. A bulking agent of claim 1 in which component a) is indigestible dextrin.

4. A bulking agent of claim 1 in which component b) is erythritol.

5. A bulking agent of claim 1 which does not contain sorbitol, isomalt, maltitol, xylitol, or mannitol.

6. A sucrose-free chewing gum containing a bulking agent as claimed in claim 1.

7. A chewing gum composition of claim 6 containing at least 40 wt% component a).

8. A chewing gum composition of claim 6 containing at least 40 wt% component b).

## Patentansprüche

1. Füllmittel, das zur Verwendung in einem Kaugummi geeignet ist, enthaltend Komponenten, die Folgendes umfassen:
a) mindestens 25 Gew.-% eines wasserlöslichen Ballaststoffpolysaccharids, das drei bis sechzig Saccharideinheiten enthält ausgewählt unter langkettigem Inulin, Fructooligosaccharid oder unverdaulichem Dextrin und
b) mindestens 25 Gew.-% eines nichtkariogenen, nichtabführenden kristallinen C₄₋₆-Monosaccharids ausgewählt unter Erythritol, Tagatose und Isomaltulose, wobei:
(i) die Komponente a) ein langkettiges Inulin und die Komponente b) Erythritol, Tagatose oder Isomaltulose ist; oder
(ii)die Komponente a) Fructooligosaccharid und die Komponente b) Erythritol oder Tagatose ist; oder
(iii) die Komponente a) unverdauliches Dextrin und die Komponente b) Erythritol, Tagatose oder Isomaltulose ist.

2. Füllmittel nach Anspruch 1, wobei die Komponente a) langkettiges Inulin oder unverdauliches Dextrin ist.

3. Füllmittel nach Anspruch 1, wobei die Komponente a) unverdauliches Dextrin ist.

4. Füllmittel nach Anspruch 1, wobei die Komponente b) Erythritol ist.

5. Füllmittel nach Anspruch 1, das kein Sorbit, Isomalt, Maltitol, Xylitol oder Mannitol enthält.

6. Saccharosefreier Kaugummi, der ein Füllmittel nach Anspruch 1 enthält.

7. Kaugummizusammensetzung nach Anspruch 6, die mindestens 40 Gew.-% Komponente a) enthält.

8. Kaugummizusammensetzung nach Anspruch 6, die mindestens 40 Gew.-% Komponente b) enthält.

## Revendications

1. Agent gonflant convenant à un usage dans une gomme à mâcher, contenant des composants comprenant :
a) au moins 25 % en poids d'un polysaccharide de fibres synthétiques soluble dans l'eau contenant trois à soixante unités saccharide, choisi parmi une inuline à longue chaîne, un fructooligosaccharide ou une dextrine non digestible, et
b) au moins 25 % en poids d'un monosaccharide en C₄-C₆ non cariogène et non laxatif, choisi parmi l'érythritol, le tagatose et l'isomaltulose, dans lequel :
(i) le composant a) est l'inuline à longue chaîne et le composant b) est l'érythritol, le tagatose ou l'isomaltulose ; ou
(ii) le composant a) est le fructooligosaccharide et le composant b) est l'érythritol ou le tagatose ; ou
(iii) le composant a) est une dextrine non digestible et le composant b) est l'érythritol, le tagatose ou l'isomaltulose.

2. Agent gonflant selon la revendication 1, dans lequel le composant a) est l'inuline à longue chaîne ou une dextrine non digestible.

3. Agent gonflant selon la revendication 1, dans lequel le composant a) est une dextrine non digestible.

4. Agent gonflant selon la revendication 1, dans lequel le composant b) est l'érythritol.

5. Agent gonflant selon la revendication 1, qui ne contient pas de sorbitol, d'isomalt, de maltitol, de xylitol ni de mannitol.

6. Gomme à mâcher sans saccharose contenant un agent gonflant selon la revendication 1.

7. Composition de gomme à mâcher selon la revendication 6, contenant au moins 40 % en poids de composant a).

8. Composition de gomme à mâcher selon la revendication 6, contenant au moins 40 % en poids de composant b).
